# EUROPEAN PATENT APPLICATION

(11) **EP 2 541 218 A2**
(43) Date of publication of application: **02.01.2013**
(21) Application number: 12174208.4
(22) Date of filing: 28.06.2012
(51) Int. Cl.: G01H 3/12

(54) **Augmented reality excessive noise display and warning system**

(30) Priority: 01.07.2011 US 201113174816
(71) Applicant: General Electric Company, Schenectady, NY 12345 (US)
(72) Inventor: Hatch, Charles Terrance, Gardnerville, NV Nevada 89410 (US); Campbell, Lam Arthur, Tomball, TX Texas 77377 (US); Sheikman, Boris Leonid, Minden, NV Nevada 89423 (US); Whitefield II, Charles David, Carson City, NV Nevada 89703 (US)
(74) Representative: Picker, Madeline Margaret

(57) **Abstract**

An augmented reality sensing system (10) and an associated method for visually informing a user of a sound level condition. The system includes a sound detector (20). The system includes a microcomputer (24) operatively connected to receive sound level data from the sound detector (20) and process the sound level data to determine information to be displayed to the user. The system includes a visual indicator (26) operatively connected to the microcomputer (24) and positioned in a field of vision of the user to display the determined information about sound level data for visual perception by the user simultaneously with the use being able to visually perceive reality.

## Description

### BACKGROUND OF THE INVENTION

### FIELD OF THE INVENTION

The invention relates to systems for warning a user of an elevated sound condition. More particularly, the invention relates to safety glasses worn by a user that inform the user of an elevated sound condition.

### DISCUSSION OF PRIOR ART

It has been estimated that approximately 30 million Americans are exposed to high intensity noise in their workplace. It has been further estimated that one in four of these workers will develop hearing loss. As a result employee exposures to noise is presently monitored periodically with sound level meters to determine the area noise level and noise dosimeters to determine the personal noise exposure level.

Unless the employee constantly monitors the sound meter, he/she may not be aware of dangerous sound levels, particularly in instances where the sound level gradually increases. Also, the employee may be so absorbed in a particular task that he/she may neglect to consult the sound meter.

Therefore, there is a need to constantly inform the employee of the sound level of the environment so that he/she may use sound protection devices and yet permit the employee to concentrate on the task at hand.

### BRIEF DESCRIPTION OF THE INVENTION

The following summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

In accordance with one aspect, the present invention provides an augmented reality sensing system for visually informing a user of a sound level condition. The system includes a sound detector. The system includes a microcomputer operatively connected to receive sound level data from the sound detector and process the sound level data to determine information to be displayed to the user. The system includes a visual indicator operatively connected to the microcomputer and positioned in a field of vision of the user to display the determined information about sound level data for visual perception by the user simultaneously with the user being able to visually perceive reality.

In accordance with another aspect, the present invention provides a method for sensing a sound level condition system and visually informing a user of the sensed sound level condition. The method includes detecting sound with a sound detector. The method includes processing sound level data with a microcomputer operatively connected to receive the sound level data from the sound detector and determining information to be displayed to the user. The method includes displaying the determined information about sound level data for visual perception by a visual indicator operatively connected to the microcomputer and positioned in a field of vision of the user to by the user such that the visual perception of the displayed determined information is simultaneous with the use being able to visually perceive reality.

### BRIEF DESCRIPTION OF THE DRAWINGS

These and other features, aspects and advantages of the invention will become apparent to those skilled in the art to which the invention relates upon reading the following detailed description with reference to the accompanying drawings, in which:
Fig. 1 is a perspective view of an example augmented reality eye glasses arrangement in accordance with an aspect of the present invention; and
Fig. 2 is an example reality scene as viewed through a lens of the augmented reality eye glasses of Fig. 1, augmented by a heads up display indicating sound levels in accordance with an aspect of the present invention.

### DETAILED DESCRIPTION OF THE INVENTION

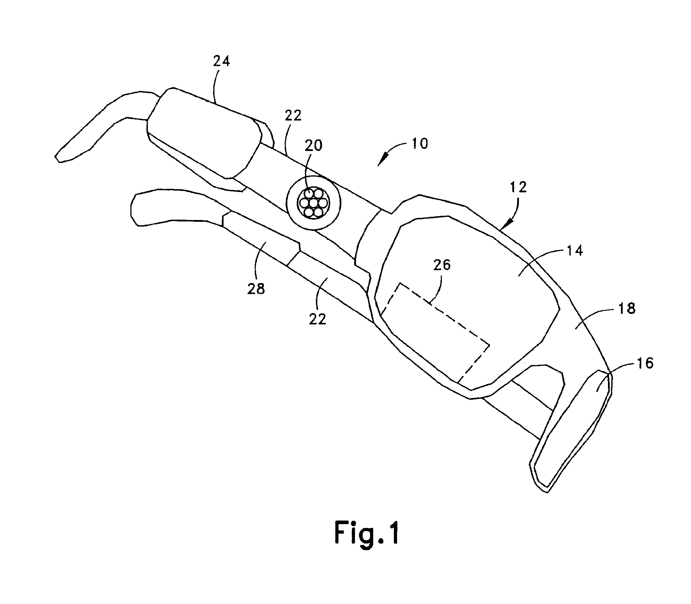

Referring to Fig. 1 of the drawings, an example augmented virtual reality sensing system 10 is disclosed. The sensing system 10 is to worn by a user in an environment that potentially has an elevated sound condition and the system provides information to the user about the sound condition. Within the shown example, the sensing system 10 includes a pair of safety eye glasses 12 having lenses 14 and 16 mounted in a frame 18.

A sound detector 20 of the sensing system 10 is mounted to the frame 18. Within the shown example, the sound detector 20 is mounted to one of two temple pieces 22 of the frame 18. Alternatively the sound detector 20 may within a separate unit carried by the user at another location (e.g., clothing pocket, arm band, head band, etc.) to lighten the glasses.

The sound detector 20 detects ambient sound and outputs a signal (e.g., an electrical signal) that conveys information or data indicative of the ambient sound. In particular, the output signal from the sound detector 20 is indicative of the volume or sound level of the ambient sound. Such sound level information or data may be conveyed via any suitable signal characteristic such as a signal amplitude value. The sound detector 20 includes structures for receiving the ambient sound and outputting the signal, and may include a piezoelectric member. Within one example, the sound detector 20 may be a microphone.

The sound detector 20 is operatively connected, such as wires or a wireless connection, to a microcomputer 24. Within the shown example, the microcomputer 24 is also mounted on one of the temple pieces 22. Alternatively the microcomputer 24 may be a separate unit carried by the user at another location (e.g., clothing pocket, arm band, head band, etc.) to lighten the glasses. The specifics of the sound detector 20 need not be specific limitations upon the present invention.

The microcomputer 24 receives the signal conveying the sound level data from the sound detector 20 and processes the sound level data. The microcomputer 24 includes suitable components/circuitry to interpret the signal conveying the sound level data. Also, the microcomputer 24 may include suitable components/circuitry to associate values (e.g., scale values) to various sound levels (e.g., loudness levels). As such, the microcomputer 24 may include processing circuits, memory circuits, etc. The specifics of the microcomputer 24 need not be specific limitations upon the present invention.

The microcomputer 24 determines information to output. For example, the microcomputer 24 may determine to output information that displays the actual determined current sound level. As another example, the microcomputer 24 may determine to output status information (e.g., a notice that the sound level is within an acceptable range or a warning that the sound level is above an acceptable range).

The microcomputer 24 is operatively connected, such as wires or a wireless connection, to a heads up display 26. The heads up display 26 in located in at least one of the lenses 14 and 16 such that the user can see content which is displayed by the heads up display. As such, the heads up display is an example of a visual indicator. The heads up display 26 may be formed by an organic light emitting diode OLED or a liquid crystal display LCD, or liquid crystal on silicon LCOS, or digital micromirrors (DMD). The specifics of the heads up display 26 need not be specific limitations upon the present invention. It should be appreciated that the microcomputer 24 and the heads up display 26 have cooperating components (e.g., video drivers) so that the microcomputer 24 provides and controls the content that will appear upon the heads up display 26.

The heads up display 26 may be configured such that the display area is effectively transparent when no content is being displayed, or, if desired, the cntent may be continuously deployed for all noise levels. Also, the heads up display 26 may be configured such that only part of the user's field of view is occupied by content being displayed. Still further, the heads up display 26 may be configured such that displayed content is semi-transparent when content is being displayed (e.g., the displayed content is effectively optically overlaid onto the scene of the user's field of view and the user can still see the scene of the user's field of view "through" the displayed content).

It is to be appreciated that one or more of the sound detector 20, microcomputer 24 and the heads up display 26 consume power. As such, a power source 28 (e.g., a battery) may be associated/provided with one or more of the sound detector 20, microcomputer 24 and the heads up display 26. Within the shown example, any required power for the sound detector 20, microcomputer 24 and the heads up display 26 is provided by a single battery arrangement 28 mounted on a temple piece 22, with the battery arrangement 28 being suitably operatively connected as needed.

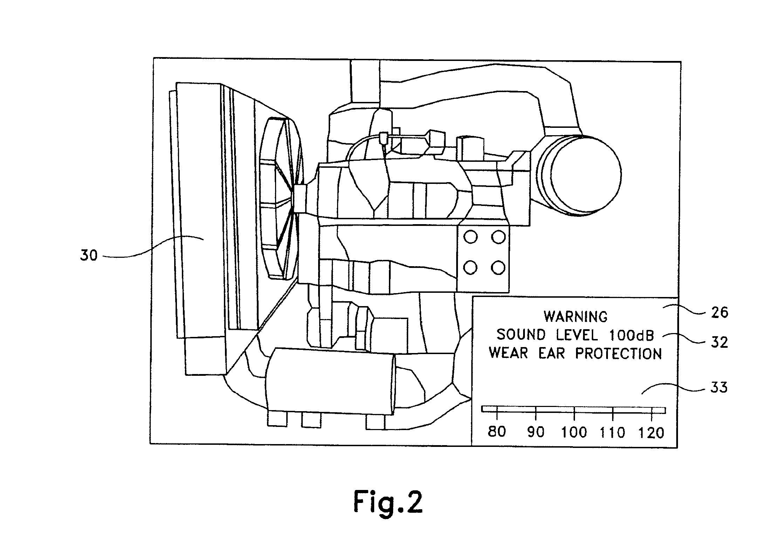

According to another aspect of the invention, the user may employ a smart phone to display the sound level, any graphics and/or text warnings such as those displayed in Fig. 2. The smart phone could use either its microphone or be wirelessly linked to a separate calibrated device carried by the user.

Referring now to Fig. 2, looking through the lenses 14 and 16, the user sees a typical reality (i.e., real life) scene as the user's field of view. In the shown example, the scene in the field of view includes a piece of machinery 30 which may be a source of sound. It is to be appreciated that the scene is referred to as reality (i.e., real life) as a distinction from the displayed content which may be provided by the heads up display. For the sake of discussion, the content being displayed by the heads up display 26 is not considered to be part of the reality. Although the displayed content certainly exists and is visible to the user, the displayed content is not normally part of the viewed scene of the user's field of view but is an augmentation to the viewed scene.

Turning to the content that is/can be displayed, the heads up display 26 can show the sound level in text 32 and/or on a graphical plot 33. Thus the heads up display is an example of a visual indicator operatively connected to the microcomputer 24 and positioned in a field of vision of the user to display the determined information about sound level data for visual perception by the user simultaneously with the use being able to visually perceive reality. The example of Fig. 2 shows a horizontal bar graph 33 with indicia indicating sound (loudness) level via decibel (dB) levels, and a bar having a horizontal length that extends to the represent the detected sound level. Specifically, within the shown example content of Fig. 2, the sound level is shown to have reached 100dB. Also, within the shown example content of Fig. 2, the content includes a text message 32 to the user. Specifically, the message is "WARNING SOUND LEVEL 100DB WEAR EAR PROTECTION." Such provided content is occurred because a predetermined threshold or trigger level, e.g. 100dB, was attained. Of course, other trigger levels may be preselected.

It is to be appreciated that the provided content may be provided utilizing various aspects/features for the purpose of providing a clear advisement to the user. For example, different colors, font sizes, flashing, etc. can be utilized. As a specific example, a sound level below the predetermined threshold may indicated via displayed content in a non-alarming color such as green, but a sound level above the predetermined threshold may be indicated in an alarming color such and red and/or may flash. As such, some displayed content can be considered to be a warning. Such a warning may be associated with a situation in which it is advisable for the user to leave a particular area (e.g. the area within which the sound above threshold is present) or wear protective hearing gear if the user will be remaining within that particular area.

Also, it is to be appreciated that various additional feature could be employed. For example, the microcomputer 24 may be adapted to store sound level information over a period of time, so that sound levels to which the user has been exposed may be periodically checked.

The invention has been described with reference to the example embodiments described above. Modifications and alterations will occur to others upon a reading and understanding of this specification. Example embodiments incorporating one or more aspects of the invention are intended to include all such modifications and alterations insofar as they come within the scope of the appended claims.

## Claims

1. An augmented reality sensing system (10) for visually informing a user of a sound level condition, the system including:
a sound detector (20);
a microcomputer (24) operatively connected to receive sound level data from the sound detector (20) and process the sound level data to determine information to be displayed to the user; and
a visual indicator (26) operatively connected to the microcomputer (24) and positioned in a field of vision of the user to display the determined information about sound level data for visual perception by the user simultaneously with the use being able to visually perceive reality.

2. A system according to claim 1, wherein the visual indicator (26) includes a configuration to display the determined information about sound level data as a sound level reading in decibels in text (32) and/or on a graphical plot (33).

3. A system according to claim 1 or claim 2, wherein the sound detector (20) is carried by the user.

4. A system according to any preceding claim, wherein the system includes an eyewear frame (18) and lens arrangement, the sound detector (20) and the microcomputer (24) are mounted to a frame (18) of the arrangement and the visual indicator (26) is a heads up display (26) associated with a lens of the arrangement secured to the frame (18).

5. A system according to any preceding claim, wherein the microcomputer (24) determines a warning as the information to be displayed to the user upon the receipt of sound level data from the sound detector (20) indicating sound above a predetermined level, and the visual indicator (26) displays the warning when the sound reaches the predetermined level.

6. A system according to claim 5, wherein the displayed visual warning is presented in decibels, in text (32) and/or on a graphical plot (33).

7. A method for sensing a sound level condition system and visually informing a user of the sensed sound level condition, the method including:
detecting sound with a sound detector (20);
processing sound level data with a microcomputer (24) operatively connected to receive the sound level data from the sound detector (20) and determining information to be displayed to the user; and
displaying the determined information about sound level data for visual perception by a visual indicator (26) operatively connected to the microcomputer (24) and positioned in a field of vision of the user to by the user such that the visual perception of the displayed determined information is simultaneous with the use being able to visually perceive reality.

8. A method according to claim 7, wherein the step of displaying the determined information includes displaying the determined information about sound level data as a sound level reading in decibels in text (32) and/or on a graphical plot (33) by the visual indicator (26).

9. A method according to claim 7 or claim 8, wherein the sound detector (20) is carried by the user.

10. A method according to any one of claims 7 to 9, wherein the steps of detecting sound, processing sound level data, and displaying the determined information are performed within an eyewear frame (18) and lens arrangement, the sound detector (20) and the microcomputer (24) are mounted to a frame (18) of the arrangement and the visual indicator (26) is a heads up display (26) associated with a lens of the arrangement secured to the frame (18).

11. A method system according to any one of claims 7 to 10, wherein the microcomputer (24) determines a warning as the information to be displayed to the user upon the receipt of sound level data from the sound detector (20) indicating sound above a predetermined level, and the visual indicator (26) displays the warning when the sound reaches the predetermined level.

12. A system according to claim 11, wherein the displayed visual warning is presented in decibels, in text (32) and/or on a graphical plot (33).
